# EUROPEAN PATENT APPLICATION

(11) **EP 4 815 480 A1**
(43) Date of publication of application: **30.09.2026**
(21) Application number: 26157749.8
(22) Date of filing: 11.02.2026
(51) Int. Cl.: H04N 23/62, H04N 23/66, H04N 23/661, H04N 23/695

(54) **CONTROL DEVICE, CONTROL METHOD, AND PROGRAM**

(30) Priority: 26.03.2025 JP 2025050978
(71) Applicant: Canon Kabushiki Kaisha, Tokyo, 146-8501 (JP)
(72) Inventor: FUJIOKA, Masaki, Ohta-ku, Tokyo, 146-8501 (JP); MITO, Koji, Ohta-ku, Tokyo, 146-8501 (JP)
(74) Representative: TBK

(57) **Abstract**

A control device acquires control information indicating a change amount in a pan direction and a change amount in a tilt direction in an imaging device; acquires a current pan direction and a current tilt direction in the imaging device; acquires a first movable range limit that is a movable range limit of the pan direction and a second movable range limit that is a movable range limit of the tilt direction in the imaging device; controls changes in the pan direction and the tilt direction of the imaging device based on the acquired control information; and stops the changes in both the pan direction and the tilt direction in a case where the current pan direction reaches the first movable range limit or in a case where the current tilt direction reaches the second movable range limit.

## Description

### BACKGROUND

### Field of the Technology

The present disclosure relates to angle of view control for cameras.

### Description of the Related Art

In recent years, cameras such as video cameras have commonly been equipped with a wireless communication function and a wired connection function. Moreover, an application (camera control application) for remotely controlling a camera via a wireless or wired network is open to the public for information terminals such as smartphones. Camera control applications provide a camera video display function, an image-capturing control function, an image-capturing assistance function, a camera information display function, a camera setting change function, and the like.

Moreover, cameras based on remote control, such as surveillance cameras, are equipped with a pan/tilt/zoom (PTZ) function of enabling a PTZ drive. Devices that control such cameras have, for example, a function of controlling a pan and tilt of the camera. An external controller that controls the pan and tilt is equipped with a joystick for freely controlling the directions of the pan and tilt. On the other hand, smartphone applications are designed to be operated using a touch panel. For this reason, a joystick user interface (UI) is used as a UI for controlling the pan and tilt of the camera on the touch panel. The joystick UI can control a pan/tilt drive of the camera by generating control values in accordance with a position of the joystick and transmitting the control values via the network to the camera equipped with the PTZ function.

Japanese Patent No. 7467229 discloses technology for controlling a camera to stop when it is about to exceed a movable range limit in either the pan or tilt direction by adjusting a speed in a direction exceeding the movable range limit.

### SUMMARY

However, in the conventional technology disclosed in Japanese Patent No. 7467229, when the pan and tilt of the camera are driven in an oblique direction, because the drive of only one of the pan and tilt is stopped by the movable range limit, there is a risk that the pan and tilt will be driven unintentionally by a user. For this reason, there was room for improvement in the control of the pan and tilt in the past.

Therefore, the present disclosure provides technology for improving pan/tilt control.

The present disclosure in its first aspect provides a control device specified in claim 1. Optional features are specified in claims 2 to 11.
The present disclosure in its second aspect provides a method for the control device as specified in claim 12. Optional feature is specified in claim 13.

Features of the present disclosure will become apparent from the following description of embodiments with reference to the attached drawings. The following description of embodiments will be described by way of example.

### BRIEF DESCRIPTION OF THE DRAWINGS

FIG. 1 is a configuration diagram of a system according to a first embodiment.
FIG. 2 is a block diagram showing a configuration of a camera 100 according to the first embodiment.
FIG. 3 is a block diagram showing a configuration of a portable phone 200 according to the first embodiment.
FIGS. 4A and 4B are examples of a screen UI of a camera control application according to the first embodiment.
FIGS. 5A to 5D are examples of a screen UI related to a marker display of the camera control application according to the first embodiment.
FIGS. 6A and 6B are examples of a screen UI related to a PTZ operation of the camera control application according to the first embodiment.
FIGS. 7A to 7C are examples of an image captured by the camera 100 according to the first embodiment.
FIG. 8 is a diagram showing a direction and a displacement input by the PTZ operation of the camera control application according to the first embodiment.
FIG. 9 is an explanatory flowchart of a pan/tilt drive process of the portable phone 200 according to the first embodiment.
FIG. 10 is an explanatory diagram of a movable range of a pan/tilt drive of the camera 100 according to the first embodiment.
FIG. 11 is an explanatory flowchart of the pan/tilt drive process in a movable range limit of the pan/tilt drive of the portable phone 200 according to the first embodiment.
FIGS. 12A to 12C are explanatory diagrams of an incidence angle relative to the movable range limit of the pan/tilt drive according to the first embodiment.
FIG. 13 is an explanatory flowchart of a pan/tilt drive process of the portable phone 200 according to a second embodiment.
FIG. 14 is a diagram showing a method for calculating a control value when a pan/tilt position after movement reaches a movable range limit in the second embodiment.

### DESCRIPTION OF THE EMBODIMENTS

Hereinafter, modes for carrying out the present disclosure will be described using the drawings. In addition, a structure for implementing the present disclosure is not limited to a structure described in an embodiment. To the extent that a similar effect can be obtained, some of constituent elements described in the embodiment may be omitted or replaced with equivalents.

### <First embodiment>

### <Configuration of system>

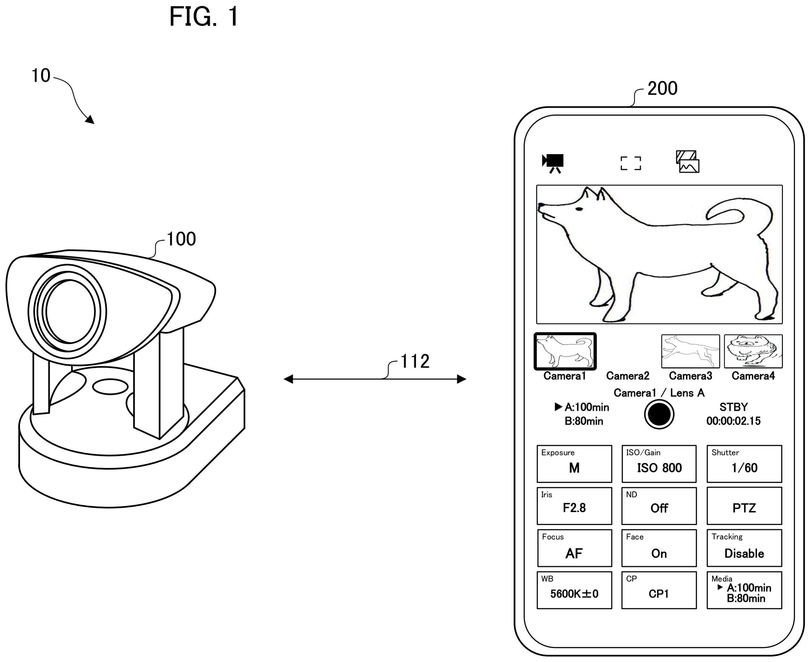

FIG. 1 is a system configuration diagram of a system according to a first embodiment of the present disclosure. This system 10 includes a camera 100 and a portable phone 200 connected by a network 112. Although the network 112 adopts Wi-Fi in the present embodiment, the network 112 is not limited thereto. The network 112 can be replaced, for example, with Bluetooth or a unique wireless communication scheme. Moreover, the network 112 may also be a wired communication network instead of a wireless communication network. In other words, the network 112 can perform communication regardless of the communication scheme, such as recommended standard (RS)-232C, RS-422A, a universal serial bus (USB), or Ethernet. However, the network 112 needs to support a scheme by which video and camera settings can be transmitted and received.

### <Configuration of camera>

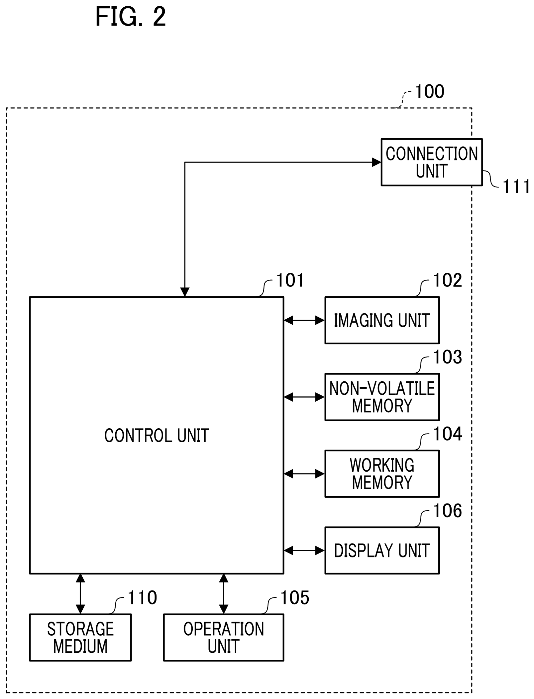

FIG. 2 is a block diagram showing a configuration of the camera 100 according to the first embodiment. The camera 100 is an example of a data processing device. Although the camera 100 will be described as an example of a data processing device here, the data processing device according to the present disclosure is not limited thereto. For example, the data processing device according to the present disclosure may be an information processing device such as a so-called tablet device or a personal computer. The camera 100 is an example of an imaging device.

The camera 100 has a control unit 101. The control unit 101 controls each part of the camera 100 in accordance with an input signal and a program to be described below. In addition, instead of the control unit 101 for controlling the entire device, a plurality of pieces of hardware may share the process to control the entire device.

The camera 100 has an imaging unit 102. The imaging unit 102 converts object light whose image is formed by a lens contained in the imaging unit 102 into an electrical signal, performs a noise reduction process or the like, and outputs digital data as image data. Captured image data from the imaging unit 102 is stored in a buffer memory, and then the control unit 101 performs a predetermined arithmetic operation so that a result of the predetermined arithmetic operation is recorded on the recording medium 110. Moreover, the imaging unit 102 has pan, tilt, and zoom mechanisms, and pan, tilt, and zoom (telephoto control/wide-angle control) operations are performed by the control unit 101.

The camera 100 has a non-volatile memory 103. The non-volatile memory 103 is a non-volatile memory that can be erased and recorded electrically, and programs to be described below executed in the control unit 101 and the like are stored therein.

The camera 100 has a working memory 104. The working memory 104 is used as a buffer memory for temporarily holding the captured image data from the imaging unit 102, a memory for an image display of the display unit 106, a working area of the control unit 101, and the like.

The camera 100 has an operation unit 105. The operation unit 105 is used to receive an instruction for the camera 100 from the user. The operation unit 105 includes, for example, operation members such as a power button for allowing the user to issue an instruction to turn on/off a power supply of the camera 100, a release switch for issuing an image-capturing instruction, and a play button for issuing an image data playback instruction. Moreover, a touch panel formed in the display unit 106, which will be described below, is also included in the operation unit 105. In addition, the release switch included in the operation unit 105 has SW1 and SW2. When the release switch is in a so-called half-pressed state, SW1 is turned on. Thereby, instructions for image-capturing preparation processes such as an autofocus (AF) process, an automatic exposure (AE) process, an auto white balance (AWB) process, and an enhancement factor (EF) (flash pre-luminescence) process are received. Moreover, SW2 is turned on by the release switch in the so-called full press state. Thereby, an instruction for an image-capturing process is received. In addition, the operation unit 105 is not limited to the above-described content, and it is only necessary for the operation unit 105 to operate the camera 100. Moreover, the operation unit 105 does not necessarily need to be built into the camera 100, and, for example, the camera 100 may be operated from an external device.

The camera 100 has a display unit 106. The display unit 106 displays a viewfinder image during the image-capturing process, displays the captured image data, and performs a text display or the like for an interactive operation. In addition, the display unit 106 does not necessarily need to be built into the camera 100. The camera 100 can be connected with an internal or external display unit 106 and it is only necessary for the camera 100 to have at least a display control function of controlling the display of the display unit 106.

The camera 100 has a recording medium 110. The recording medium 110 can record image data output from the imaging unit 102. The recording medium 110 may be configured to be attachable to or detachable from the camera 100 or may be built into the camera 100. In other words, it is only necessary for the camera 100 to have at least a means for accessing the recording medium 110.

The camera 100 has a connection unit 111. The connection unit 111 is an interface for connecting with an external device. The camera 100 of the present embodiment is capable of exchanging data with the external device through the connection unit 111. In addition, in the present embodiment, the connection unit 111 includes an interface for communicating with the external device via a wireless local area network (LAN). The control unit 101 implements wireless communication with the external device by controlling the connection unit 111. In addition, a communication scheme is not limited to the wireless LAN.

In addition, the camera 100 in the present embodiment can operate as a client device in an infrastructure mode of wireless LAN communication. When the camera 100 operates as the client device, it can participate in a network formed by an access point (hereinafter referred to as an AP) by connecting to a nearby AP. Although the camera 100 in the present embodiment is a type of AP, it is also possible to operate as a simple AP with more limited functions (hereinafter referred to as a simple AP). In addition, the AP in the present embodiment is an example of a relay device. When the camera 100 is operating as the simple AP, the camera 100 forms a network on its own. Devices around the camera 100 recognize the camera 100 as an AP and can participate in the network formed by the camera 100. It is assumed that a program for operating the camera 100 as described above is held in a non-volatile memory 103. Although the camera 100 in the present embodiment is a type of AP, it is a simple AP that does not have a gateway function to transmit data received from the client device to an Internet provider or the like. Therefore, even if the camera 100 receives data from other devices participating in the network formed by its own device, the data cannot be transmitted to a network such as the Internet. Alternatively, the connection unit 111 may be an interface for wired communication instead of wireless communication. In other words, it can be an interface for wired communication regardless of the communication scheme, such as RS-232C, RS-422A, USB, or Ethernet.

The camera 100 has been described above. Next, the portable phone 200, which is as an example of an external device, will be described.

### <Configuration of display control device>

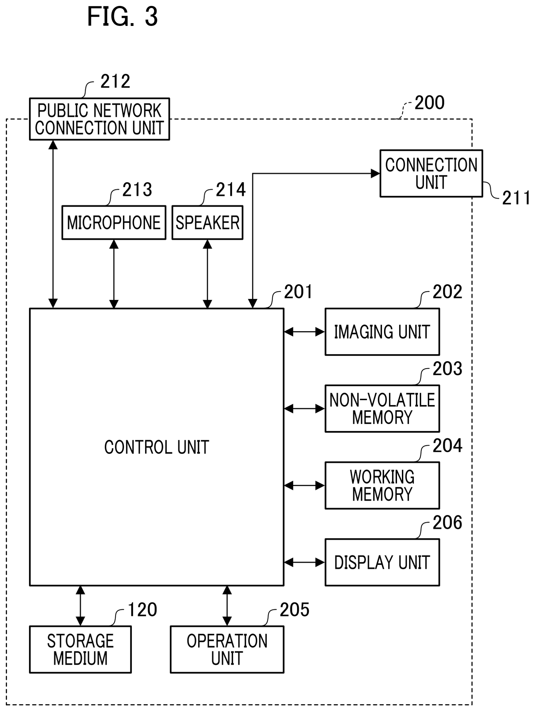

FIG. 3 is a block diagram showing the configuration of the portable phone 200 according to the first embodiment. The portable phone 200 is an example of a display control device. Although the portable phone will be described as an example of the display control device here, the display control device is not limited thereto. For example, the display control device may be a digital camera with a wireless function, a portable media player, or another information processing device such as a so-called tablet device, a personal computer, or a smartphone.

The portable phone 200 has a control unit 201. The control unit 201 controls each part of the portable phone 200 in accordance with the input signal and the program to be described below. In addition, instead of the control unit 201 controlling the entire device, a plurality of pieces of hardware may share the process to control the entire device.

The portable phone 200 has an imaging unit 202. The imaging unit 202 converts object light whose image is formed by the lens contained in the imaging unit 202 into an electrical signal, performs a noise reduction process or the like, and outputs digital data as image data. The captured image data from the imaging unit 202 is stored in the buffer memory, and then the control unit 201 performs a predetermined arithmetic operation so that a result of the predetermined arithmetic operation is recorded on the recording medium 210.

The portable phone 200 has a non-volatile memory 203. The non-volatile memory 203 is a non-volatile memory that can be erased and recorded electrically, and the basic software to be executed by the control unit 201, the operating system (OS), various types of programs, and the like are stored. It is assumed that the program for communicating with the camera 100 is also held in the non-volatile memory 203 and installed as a camera control application. In addition, the process of the portable phone 200 in the present embodiment is implemented by reading the program provided by the camera control application. It is assumed that the camera control application has a program to use the basic functions of the OS installed on the portable phone 200 (e.g., a wireless LAN function, a Bluetooth function, a function of calling other applications, and the like). Moreover, the camera control application has a remote image-capturing function of performing the image-capturing process by remotely manipulating the camera 100 from the portable phone 200 while viewing a live view image obtained from the camera 100 on the portable phone 200. Furthermore, the camera control application has a function of remotely viewing the image data recorded on the recording medium mounted on the camera 100 and a remote viewing function of receiving the image data.

In addition, the OS of the portable phone 200 may have a program to implement the process in the present embodiment.

The portable phone 200 has a working memory 204. The working memory 204 is used as a buffer memory for temporarily saving the image data generated by the imaging unit 202, an image display memory of a display unit 206, a working area of the control unit 201, or the like.

The portable phone 200 has an operation unit 205. The operation unit 205 is used to receive an instruction for the portable phone 200 from the user. The operation unit 205 includes, for example, a power button for allowing the user to issue an instruction for turning on/off a power supply of the portable phone 200, a touch panel formed on the display unit 206, and the like.

The portable phone 200 has the display unit 206. The display unit 206 displays image data and performs a text display and the like for an interactive operation. In addition, the display unit 206 does not necessarily need to be built into the portable phone 200. The portable phone 200 can be connected with the display unit 206 and it is only necessary for the portable phone 200 to have at least a display control function of controlling the display of the display unit 206.

The portable phone 200 has a recording medium 210. The recording medium 210 can record the image data output from the imaging unit 202 or the image data received from the data processing device. The recording medium 210 may be configured to be attachable to or detachable from the portable phone 200 or may be built into the portable phone 200. In other words, it is only necessary for the portable phone 200 to have at least a means for accessing the recording medium 210.

The portable phone 200 has a connection unit 211. The connection unit 211 is an interface for connecting with an external device. The portable phone 200 of the present embodiment is capable of exchanging data with an external device through the connection unit 211. In addition, in the present embodiment, the connection unit 211 includes an interface for communicating with an external device via wireless LAN. The control unit 201 implements wireless communication with the external device by controlling the connection unit 211. In addition, the camera 100 in the present embodiment can operate as a client device at least in the infrastructure mode of the wireless LAN communication, and can participate in the network formed by the nearby APs. Moreover, the camera 100 may operate as a simple AP and the portable phone 200 may participate in the simple AP of the camera 100.

The portable phone 200 has a public network connection unit 212. The public network connection unit 212 is an interface used for public wireless communication. The portable phone 200 can make calls and perform data communication with other devices through the public network connection unit 212. When a call is connected, the control unit 201 inputs and outputs audio signals through a microphone 213 and a speaker 214. In the present embodiment, it is assumed that the public network connection unit 212 includes an interface for performing communication using 3G (third-generation mobile communication system). In addition, the present disclosure is not limited to 3G, and other communication schemes such as LTE, WiMAX, ADSL, FTTH, and the so-called 4G (fourth-generation mobile communication system) can be used. LTE is an abbreviation for Long Term Evolution. WiMAX is an abbreviation for Worldwide Interoperability for Microwave Access. ADSL is an abbreviation for Asymmetric Digital Subscriber Line. FTTH is an abbreviation for Fiber To The Home. Moreover, the connection unit 211 and the public network connection unit 212 do not necessarily need to be configured with independent hardware, and can be used together, for example, with a single antenna.

The portable phone 200 has been described above. Here, in the following description, the portable phone 200 may be described as a main processing entity. However, in reality, the control unit 201 reads a program stored in the non-volatile memory 203 and implements various types of processes. Likewise, even in portions where the camera 100 appears to be described as the main processing unit, the control unit 101 reads a program stored in the non-volatile memory 103 and implements various types of processes.

### <Description of screen of camera control application for portable phone 200>

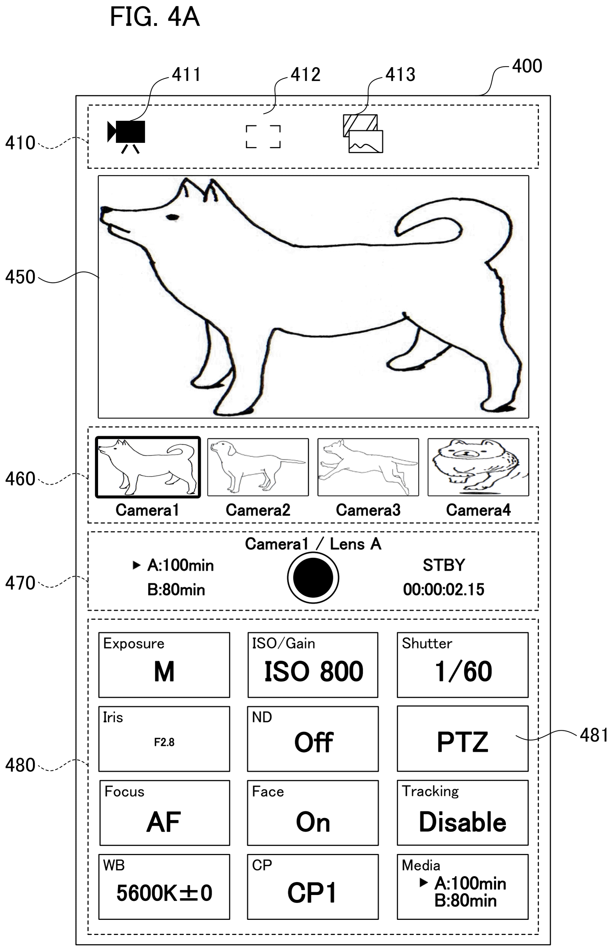

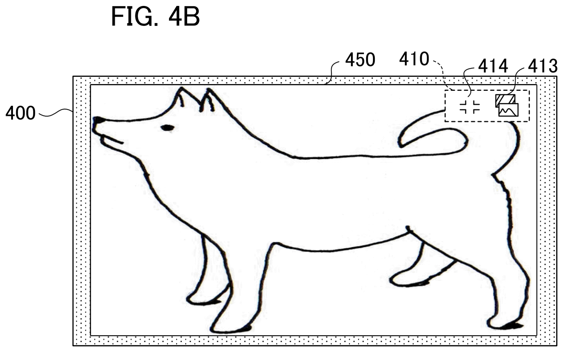

FIGS. 4, 5 and 6 are examples of a screen of a camera control application displayed on the display unit 206 of the portable phone 200. Here, the camera control application can connect a plurality of cameras at the same time and operate each camera. Moreover, the camera control application can receive a video captured by the camera and various types of current settings of the camera by communicating with the camera, and display the video and the various types of current settings on the camera control application screen.

FIG. 4A is an example of a camera control application screen. In the example of the camera control application screen 400 of FIG. 4A, the captured video and the various types of current settings of the camera are received from the camera connected through communication and displayed on the screen.

An application setting area 410 is arranged in the camera control application screen 400. The application setting area 410 is an area where setting buttons are arranged to change various types of settings of the camera control application. In the example of the camera control application screen 400 of FIG. 4A, a camera connection setting button 411, a full-screen display button 412, a marker setting button 413, and the like are arranged in the application setting area 410. When the user touches and presses the camera connection setting button 411, the screen transitions to a camera connection setting screen.

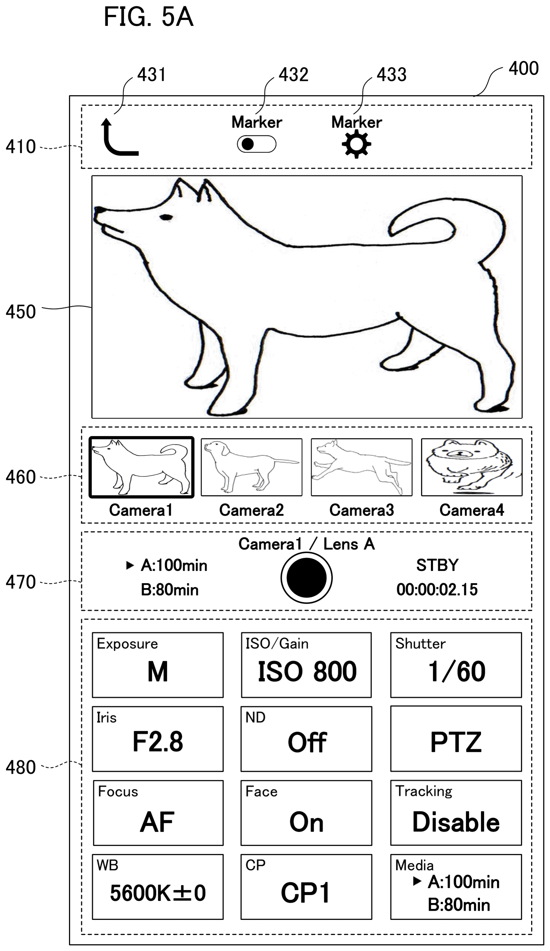

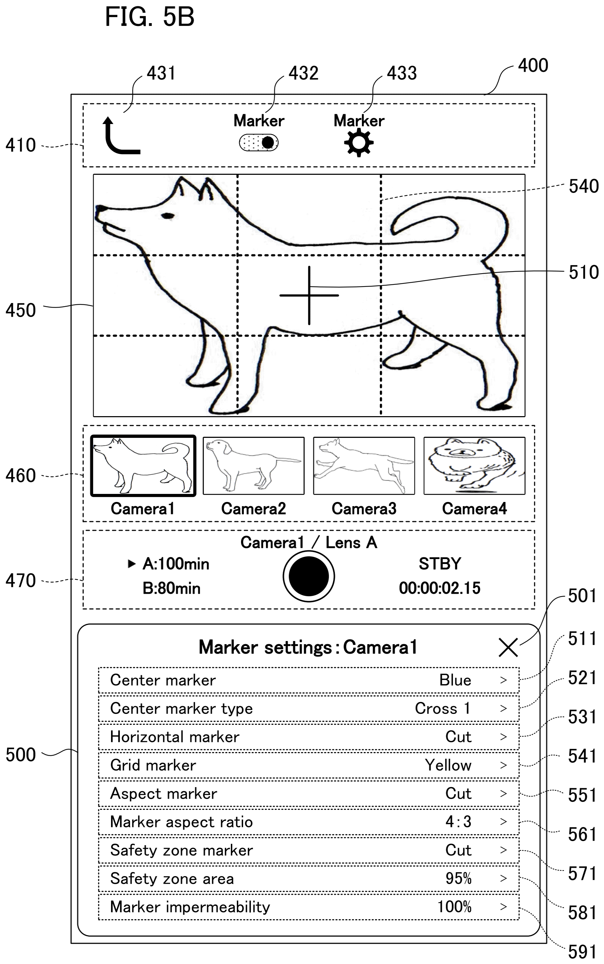

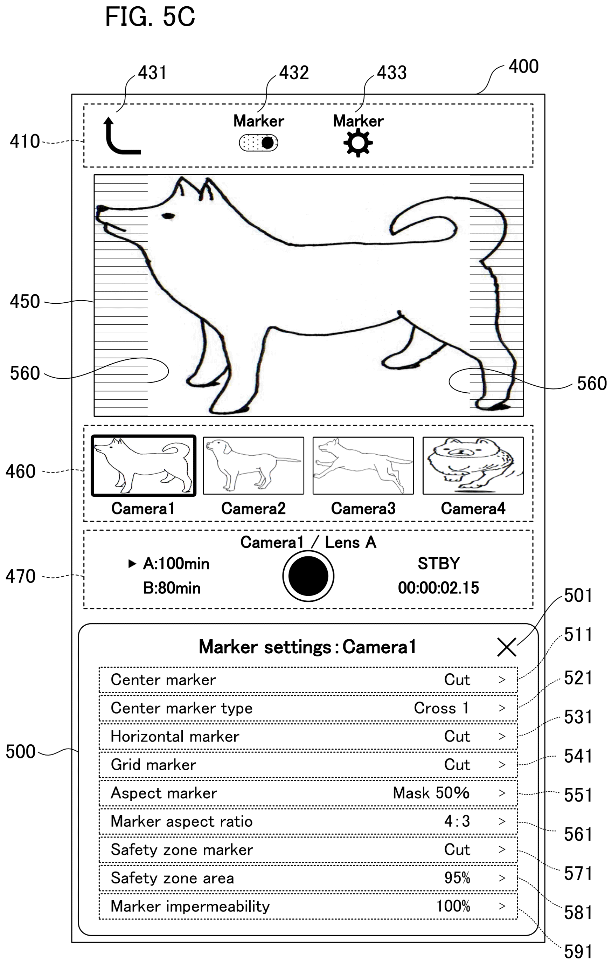

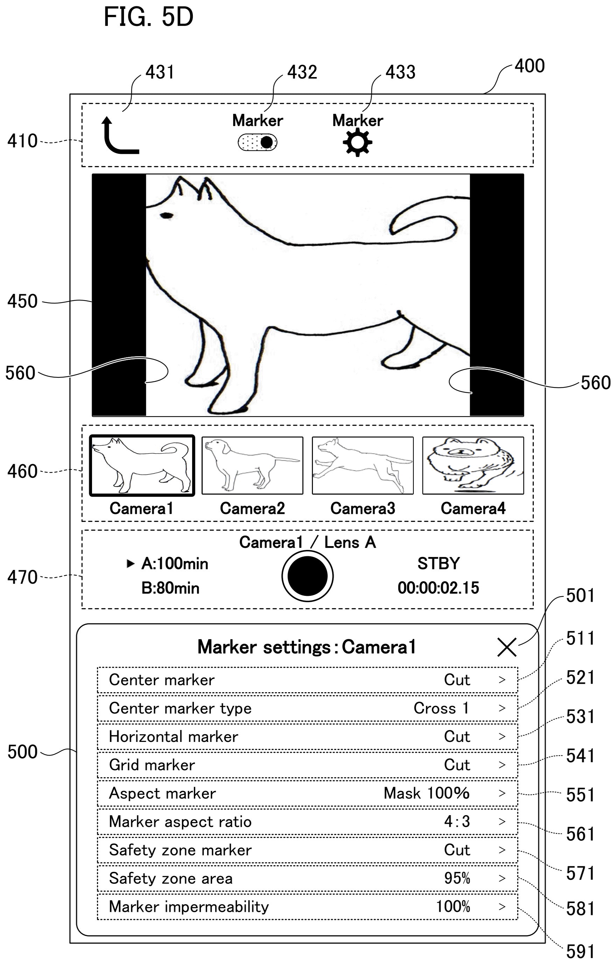

When the user touches and presses the full-screen display button 412, the camera control application screen 400 displays a video of the camera displayed in the main video area 450 in a full screen, as shown in FIG. 4B. When the video of the camera is displayed in the full screen, the camera control application screen 400 displays the application setting area 410 superimposed on the video of the camera as shown in FIG. 4B. In addition, in the application setting area 410 when the video of the camera is displayed in the full screen, an operation screen display button 414 and the marker setting button 413 are arranged as shown in FIG. 4B. When the user touches and presses the operation screen display button 414, the camera control application screen 400 transitions to the screen shown in FIG. 4A. When the user touches and presses the marker setting button 413, the camera control application screen 400 transitions to the screen shown in FIG. 5.

As shown in FIG. 4A, a main video area 450 and a sub-video area 460 are arranged in the camera control application screen 400. The main video area 450 and the sub-video area 460 are areas where images received from the camera is displayed. In this example, the camera control application is connected to a plurality of cameras at the same time, and videos captured by the cameras are aligned and displayed in the sub-video area 460. Moreover, the video of the camera of a control target of the camera control application is displayed in the main video area 450.

As shown in FIG. 4A, a recorded information area 470 is arranged in the camera control application screen 400. The recorded information area 470 is an area where recorded information and a record button of the camera of the control target are displayed. The recorded information is, for example, the remaining media time and timecode of the camera of the control target and the like. Moreover, when the record button is touched and pressed, the camera control application starts or stops a process for recording the video captured by the camera of the control target.

As shown in FIG. 4A, an operation area 480 is arranged in the camera control application screen 400. The operation area 480 is an area where the operation buttons for manipulating the camera of the control target is arranged. The operation buttons are, for example, buttons for manipulating the exposure, shutter speed, zoom, and focus of the camera of the control target and the like. When the user touches and presses the operation button, the camera control application screen 400 executes the operation or displays the operation screen. In the operation area 480, for example, a PTZ operation button 481, which receives a screen display instruction for performing a PTZ operation of the camera of the control target, is arranged. Moreover, the user can display the operation buttons arranged outside the area by performing an operation for scrolling through the operation area 480.

FIGS. 5A to 5D are examples of a camera control application screen for a marker display. The screen transitions to camera control application screens 400 shown in FIGS. 5A to 5D by the user touching and pressing the marker setting button 413 arranged in the application setting area 410 of FIG. 4A. In the example of the camera control application screen 400 shown in FIG. 5, a back button 431, a marker display switch button 432, a marker detail setting button 433, and the like are arranged in the application setting area 410. When the user touches and presses the back button 431, the camera control application screen 400 transitions to the screen shown in FIG. 4A.

When the user touches and presses the marker display switch button 432, the camera control application screen 400 switches the state of a marker display superimposed on the main video area 450 to a valid state or an invalid state. The marker display switch button 432 in FIG. 5A indicates that the marker display is invalid. In this case, the main video area 450 displays the video of the camera of the control target in a state in which the marker is not superimposed for a display, as shown in FIG. 5A.

The marker display switch button 432 in FIGS. 5B, 5C, and 5D indicates that the marker display is valid. In this case, the main video area 450 displays the video of the camera of the control target with the marker superimposed as shown in FIGS. 5B, 5C, and 5D. In the main video area 450 in FIG. 5B, a center marker 510 and a grid marker 540 are displayed. In the main video area 450 of FIG. 5C, a 4:3 aspect marker 560 shows a mask with an impermeability of 50%. In the main video area 450 of FIG. 5D, the 4:3 aspect marker 560 shows a mask with an impermeability of 100%.

When the user touches and presses the marker detail setting button 433, the camera control application screen 400 displays a marker detail setting screen 500 as shown in FIGS. 5B, 5C, and 5D. In the marker detail setting screen 500, interfaces for setting display forms of various types of markers, such as a close button 501, a center marker setting 511, a grid marker setting 541, and an aspect marker setting 551 are arranged. In the marker detail setting screen 500, interfaces for setting display forms of markers, such as a center marker type setting 521, a horizontal marker setting 531, and a marker aspect ratio setting 561 are arranged. In the marker detail setting screen 500, interfaces for setting display forms of markers such as a safety zone marker setting 571, a safety zone area setting 581, and a marker impermeability setting 591 are arranged. When the user touches and presses the close button 501, the camera control application screen 400 hides the marker detail setting screen 500.

When the marker display switch button 432 is valid as shown in FIGS. 5B, 5C, and 5D, the camera control application screen 400 displays the marker in the main video area 450 according to the setting content of the marker detail setting screen 500.

In the marker detail setting screen 500 of FIG. 5B, the center marker setting 511 is set to blue and the grid marker setting 541 is set to yellow. Therefore, in the main video area 450 of FIG. 5B, a blue center marker 510 and a yellow grid marker 540 are displayed.

In the marker detail setting screen 500 of FIG. 5C, the aspect marker setting 551 is set to a mask of 50%, and the marker aspect ratio setting 561 is set to 4:3. Therefore, in the main video area 450 of FIG. 5C, the 4:3 aspect marker 560 is displayed with a mask with an impermeability of 50%.

In the marker detail setting screen 500 of FIG. 5D, the aspect marker setting 551 is set to a mask of 100%, and the marker aspect ratio setting 561 is set to 4:3. Therefore, in the main video area 450 of FIG. 5D, the 4:3 aspect marker 560 is displayed with a mask with an impermeability of 100%.

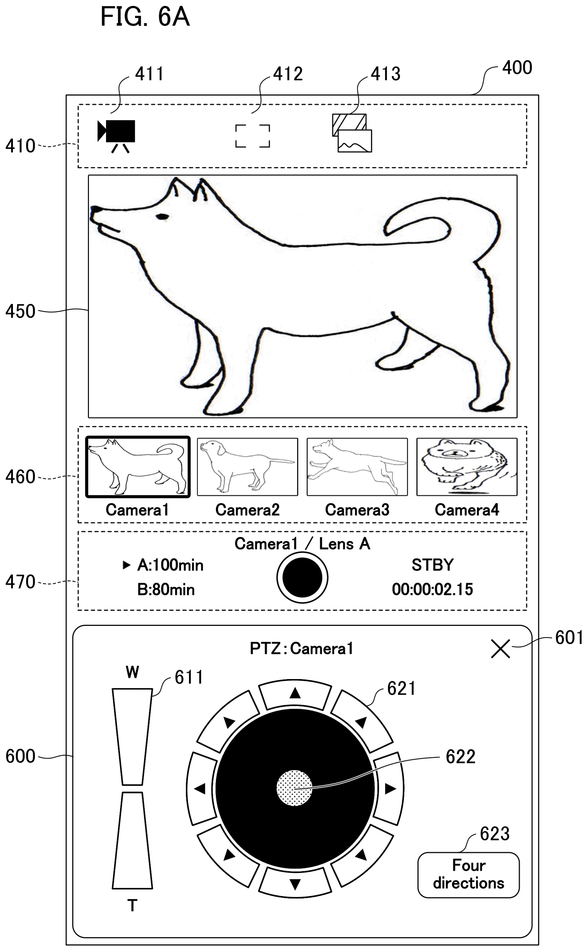

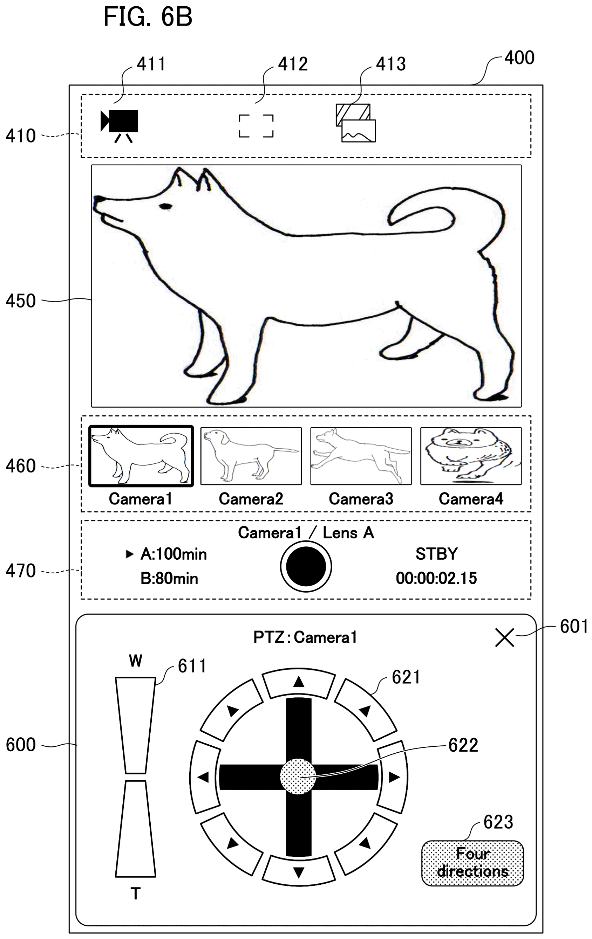

FIGS. 6A and 6B are examples of a camera control application screen for a PTZ operation. The operation state by a direction limit button 623 is different between the camera control application screen 400 of FIG. 6A and the camera control application screen 400 of FIG. 6B, as described in detail below. The screen transitions to the camera control application screen 400 shown in FIGS. 6A and 6B when the user touches and presses the PTZ operation button 481 arranged in the operation area 480 of FIG. 4A.

In the camera control application screen 400 of FIGS. 6A and 6B, the PTZ operation screen 600 is displayed. In the PTZ operation screen 600, a close button 601, a zoom operation button 611, a direction button 621, a joystick 622, the direction limit button 623, and the like are arranged. When the user touches and presses the close button 601, the camera control application screen 400 hides the PTZ operation screen 600.

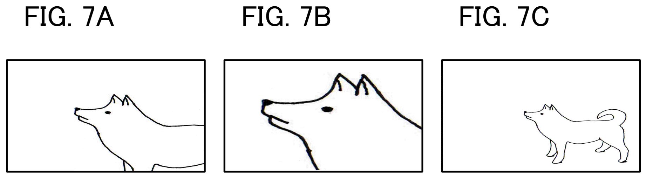

When the user touches and presses the zoom operation button 611, the camera control application changes zoom magnification of the camera 100, which is the camera of the control target. Specifically, the camera control application controls the zoom magnification of the camera 100 so that a zoom-in operation is performed when the zoom operation button 611 is touched and pressed upward and a zoom-out operation is performed when the zoom operation button 611 is touched and pressed downward. Furthermore, the camera control application displays the video received from the camera 100 after the zoom magnification change in the main video area 450 and the sub-video area 460 of the camera control application screen 400. When the zoom-in operation is performed in the camera 100, an angle of view (a field of view) of the captured video changes, for example, from FIG. 7A to FIG. 7B. Moreover, when the zoom-out operation is performed in the camera 100, the angle of view of the captured video changes, for example, from FIG. 7A to FIG. 7C. If an operation for changing the zoom magnification of the camera 100 is possible, it is not limited to an operation by the zoom operation button 611. While the zoom operation button 611 is touched and pressed in the camera control application, the portable phone 200 transmits a change amount in the zoom magnification to the camera 100 at regular intervals. The change amount in the zoom magnification may be a predetermined value or a value set by the user.

When the user touches and presses the direction button 621, the camera control application changes a pan/tilt posture of the camera 100. When the direction button 621 that has been touched and pressed indicates an upward direction, the camera control application tilts the camera 100 in the upward direction. When the direction button 621 that has been touched and pressed indicates a downward direction, the camera control application tilts the camera 100 in the downward direction. When the direction button 621 that has been touched and pressed indicates a left direction, the camera control application pans the camera 100 in the left direction. When the direction button 621 that has been touched and pressed indicates a right direction, the camera control application pans the camera 100 in the right direction. When the direction button 621 that has been touched and pressed indicates an upper-right direction, the camera control application pans the camera 100 in the right direction and tilts the camera 100 in the upward direction. When the direction button 621 that has been touched and pressed indicates a lower-right direction, the camera control application pans the camera 100 in the right direction and tilts the camera 100 in the downward direction. When the direction button 621 that has been touched and pressed indicates a lower-left direction, the camera control application pans the camera 100 in the left direction and tilts the camera 100 in the downward direction. When the direction button 621 that has been touched and pressed indicates an upper-left direction, the camera control application pans the camera 100 in the left direction and tilts the camera 100 in the upward direction. While the direction button 621 is touched and pressed in the camera control application, the portable phone 200 transmits movement amounts of the pan and tilt to the camera 100 at regular intervals. Amounts of movements of the pan and tilt may be predetermined values or may be values set by the user.

The joystick 622 is an interface that uses the center as a reference position and inputs the direction and displacement from the reference position according to a swiping operation. A direction that can be operated by the joystick 622 of FIG. 6A is 360°. In this case, the background of the joystick 622 is colored in all 360° directions, as shown in FIG. 6A, making it clear that the direction that can be operated is 360°. Moreover, the directions that can be operated by the joystick 622 of FIG. 6B are four directions, i.e., upward, downward, left, and right directions. In this case, the background of the joystick 622 is colored in the four directions, i.e., the upward, downward, left, and right directions, as shown in FIG. 6B, to clearly specify that the four directions that can be operated are the upward, downward, left, and right directions. The user touches and presses the direction limit button 623 to switch the direction that can be operated by the joystick 622. When the direction that can be operated by the joystick 622 is 360°, the camera control application screen 400 displays the direction limit button 623 as shown in FIG. 6A. When the directions that can be operated by the joystick 622 are the four directions, i.e., the upward, downward, left, and right directions, the camera control application screen 400 displays the direction limit button 623 shown in FIG. 6B.

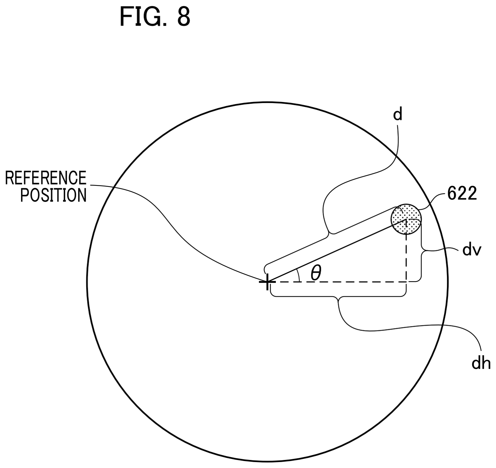

When the user performs the swiping operation on the joystick 622, the camera control application decides a horizontal displacement dh and a vertical displacement dv as shown in FIG. 8 based on a direction θ and a displacement d that have been input. The horizontal displacement is an example of a change amount in the pan direction. The vertical displacement is an example of a change amount in the tilt direction. The direction θ is the angle of the joystick 622 when centered on a reference position, and has a value range of 0° to 360° (a value range greater than or equal to 0 rad and less than 2π rad). In addition, if the directions that can be operated by the joystick 622 are the four directions, i.e., the upward, downward, left, and right directions, the direction θ is limited to 0°, 90°, 180°, and 270° (0 rad, π/2 rad, π rad, and 3π/2 rad). The horizontal displacement dh is calculated by D×cosθ. Moreover, the vertical displacement dv is calculated by d×sinθ.

When the horizontal displacement dh has a positive value, the camera control application pans the camera 100 in the right direction at a speed corresponding to an absolute value of the horizontal displacement dh. When the horizontal displacement dh has a negative value, the camera control application pans the camera 100 in the left direction at a speed corresponding to an absolute value of the horizontal displacement dh. When the vertical displacement dv has a positive value, the camera control application tilts the camera 100 in the upward direction at a speed corresponding to an absolute value of the vertical displacement dv. When the vertical displacement dv has a negative value, the camera control application tilts the camera 100 in the downward direction at a speed corresponding to an absolute value of the vertical displacement dv.

In addition, if the horizontal and vertical displacements of the joystick 622 can be acquired from the reference position, the present disclosure is not limited to the above calculation methods. While the joystick 622 is swiped in the camera control application, the portable phone 200 transmits movement amounts of the pan and tilt to the camera 100 at regular intervals. The movement amount of the pan is a value obtained by multiplying the horizontal displacement by a predetermined coefficient. The movement amount of the tilt is a value obtained by multiplying the vertical displacement by a predetermined coefficient. Here, the predetermined coefficient can be a predetermined value or a value set by the user. In addition, if the movement amount of the pan and the movement amount of the tilt can be decided based on the operation of the joystick 622, the present disclosure is not limited to the above calculation method. The camera control application controls the camera 100 to move positions of the pan and tilt at a unique ratio in a direction input by the joystick 622.

### <Description of flow of pan/tilt drive>

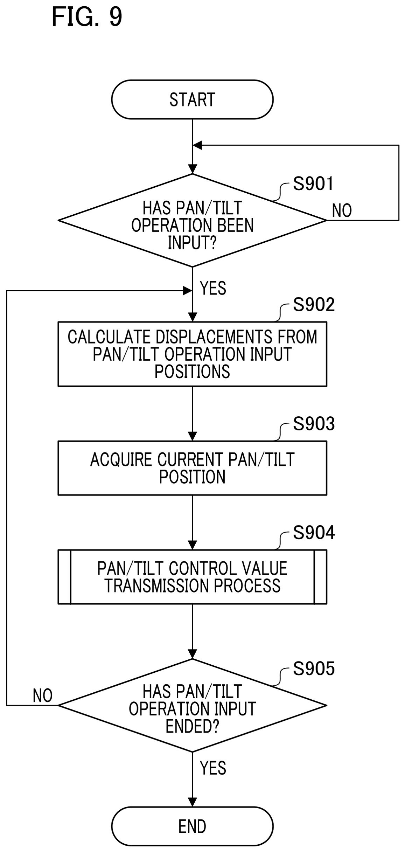

FIG. 9 shows a flow of a pan/tilt drive control operation in the portable phone 200. A flowchart shown in FIG. 9 is implemented by the control unit 201 loading a program recorded in a non-volatile memory 203 into the working memory 204 to execute the program. Along with the above-described diagram, the flow of FIG. 9 will be described. When the user touches and presses the PTZ operation button 481 and displays the PTZ operation screen 600, the flowchart shown in FIG. 9 starts.

In step S901, the control unit 201 detects an input of the pan/tilt operation and determines whether or not the pan/tilt operation has been input. The pan/tilt operation is, for example, an operation for touching and pressing a button that is the direction button 621 shown in FIGS. 6A and 6B, or swiping the joystick 622. When it is determined that the pan/tilt operation has been input, the control unit 201 executes the processing of step S902. When the control unit 201 determines that the pan/tilt operation has not been input, the processing of step S901 continues and the input of the pan/tilt operation continues to be detected. This pan/tilt operation is an example of a first acquisition means configured to acquire control information indicating a change amount in a pan direction and a change amount in a tilt direction in the imaging device.

In step S902, the control unit 201 decides the horizontal and vertical displacements based on the pan/tilt operations and saves the decided horizontal and vertical displacements in the working memory 204. In the case of the pan/tilt operations using the joystick 622 shown in FIGS. 6A and 6B, the horizontal displacement dh and vertical displacement dv are decided according to FIG. 8. In the case of the pan/tilt operations using direction buttons 621 shown in FIGS. 6A and 6B, the horizontal displacement dh and the vertical displacement dv are decided according to the direction of the button that has been touched and pressed. When the left/right direction button 621 is touched and pressed, the horizontal displacement dh is a predetermined value and the vertical displacement dv is 0. When the vertical direction button 621 is touched and pressed, the horizontal displacement dh is 0 and the vertical displacement dv is a predetermined value. When the diagonal direction button 621 is touched and pressed, the horizontal displacement dh and the vertical displacement dv are predetermined values, and a ratio of the horizontal displacement dh and the vertical displacement dv is 1:1. In addition, the predetermined value may be a value designated by the user.

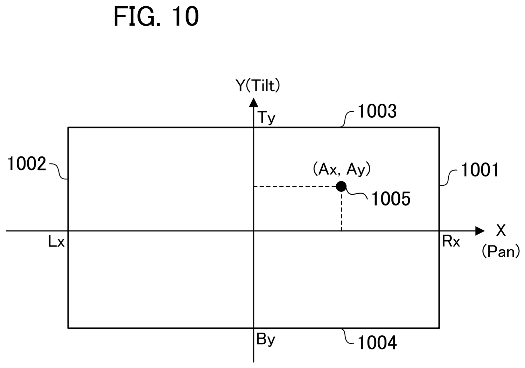

In step S903, the control unit 201 acquires the current pan/tilt position of the camera 100 via the connection unit 211. This process is an example of a second acquisition means configured to acquire a current pan direction and a current tilt direction in the imaging device. The current pan/tilt position will be described with reference to FIG. 10. The pan position is a position in the pan direction, and the tilt position is a position in the tilt direction. For example, the pan position and the tilt position can be expressed by coordinates in a pan coordinate system and coordinates in a tilt coordinate system, respectively. Moreover, the pan/tilt position can be expressed by coordinates in the pan/tilt coordinate system. Moreover, the pan position can be expressed by an angle (rotation position) relative to a rotation axis of the pan direction. Likewise, the tilt position can also be expressed by an angle (rotation position) relative to a rotation axis of the tilt direction.

In FIG. 10, the horizontal axis represents the pan direction, the vertical axis represents the tilt direction, and a square frame is a movable range of the pan/tilt drive. Reference sign 1001 in FIG. 10 denotes a right limit of the movable range, i.e., a right movable range limit, in the pan direction. Reference sign 1002 in FIG. 10 denotes a left limit of the movable range, i.e., a left movable range limit, in the pan direction. Reference sign 1003 in FIG. 10 denotes an upper limit of the movable range, i.e., an upper movable range limit, in the tilt direction. Reference sign 1004 in FIG. 10 denotes a lower limit of the movable range, i.e., a lower movable range limit, in the tilt direction. Reference sign 1005 in FIG. 10 denotes a current pan/tilt position.

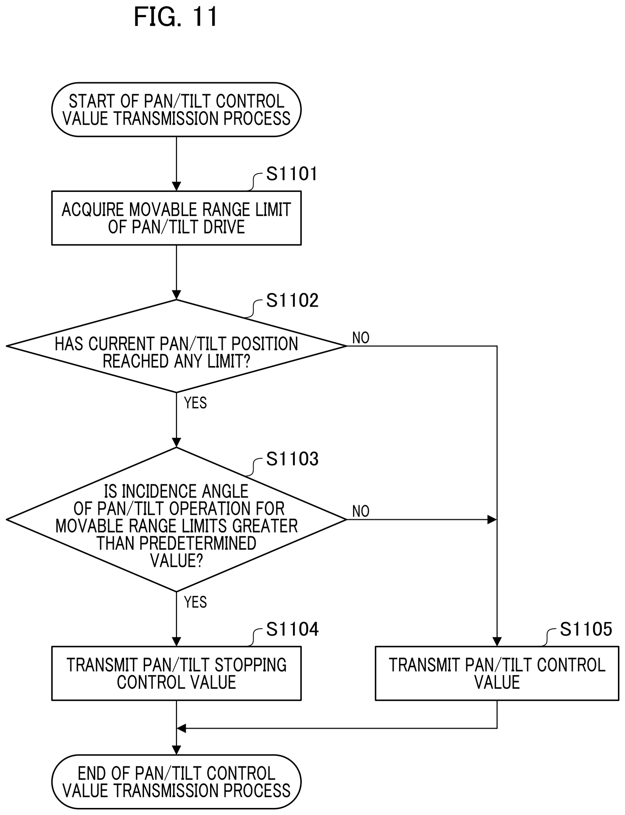

In step S904, the control unit 201 calculates pan/tilt control values based on the horizontal displacement dh and the vertical displacement dv stored in the working memory 204 in step S902 and a current pan/tilt position acquired in step S903. Moreover, in step S904, the control unit 201 transmits the calculated pan/tilt control value to the camera 100 via the connection unit 211. The detailed operation of step S904 will be described in the flowchart in FIG. 11 to be described below.

In step S905, the control unit 201 determines whether or not an input of the pan/tilt operation has ended by detecting the input of the pan/tilt operation. When the control unit 201 determines that the input of the pan/tilt operation has not ended, the process continues by returning to step S902. When the control unit 201 determines that the input of the pan/tilt operation has ended, the process of the flowchart in FIG. 9 ends after the stopping control value for stopping the pan/tilt drive is transmitted to the camera 100 via the connection unit 211. When the stopping control value of the pan/tilt drive has been transmitted in the processing of step S904, the control unit 201 may not transmit the stopping control value of the pan/tilt drive in the processing of step S905.

Next, the calculation of the pan/tilt control value for step S904 in FIG. 9 will be described in detail with reference to FIG. 11. FIG. 11 is an explanatory flowchart of a process of the pan/tilt drive at the movable range limit of the pan/tilt drive of the portable phone 200, which is a process to be executed in step S904 of FIG. 9.

In step S1101, the control unit 201 acquires the movable range limit of the pan/tilt operation on the camera 100 via the connection unit 211. The movable range limits of the pan/tilt operation are the movable range limits 1001, 1002, 1003, and 1004 in FIG. 10. The movable range limit of the pan/tilt drive is a physical movable range limit of the pan/tilt drive of the imaging unit 102 of the camera 100, but may also be a movable range limit set by software. This process is an example of a third acquisition means configured to acquire a first movable range limit that is a movable range limit of the pan direction and a second movable range limit that is a movable range limit of the tilt direction in the imaging device.

In step S1102, the control unit 201 determines whether or not the current pan/tilt position 1005 acquired in step S903 has reached one of the movable range limits 1001 to 1004 of the pan/tilt drives. When the control unit 201 determines that the current pan/tilt position 1005 has reached one of the movable range limits 1001 to 1004, the processing of S1103 is executed. When the control unit 201 determines that the current pan/tilt position 1005 has not reached any of the movable range limits 1001 to 1004, the processing of S1105 is executed. Moreover, when the current pan/tilt position 1005 reaches any one of the movable range limits 1001 to 1004 of the pan/tilt drive, the control unit 201 stores a set value indicating that it has reached the movable range limit in the working memory 204. For example, when the current pan/tilt position 1005 has reached the right movable range limit 1001, the setting value indicating the right movable range limit 1001 is stored in the working memory 204.

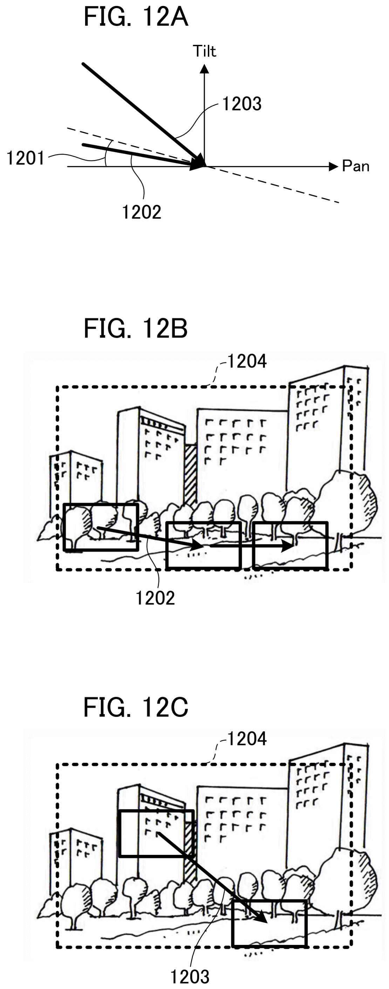

In step S1103, the control unit 201 determines whether or not an incidence angle of the pan/tilt operation for the movable range limits 1001 to 1004 is greater than a predetermined value. When the control unit 201 determines that the incidence angle of the pan/tilt operation for the movable range limits 1001 to 1004 is greater than the predetermined value, the processing of step S1104 is executed. When the control unit 201 determines that the incidence angle of the pan/tilt operation for the movable range limits 1001 to 1004 is less than or equal to the predetermined value, the processing of step S1105 is executed. This matter will be described below with reference to FIGS. 12A to 12C.

FIG. 12A shows the incidence angle of the pan/tilt operation for the lower movable range limit 1004. In FIG. 12A, reference sign 1201 denotes a predetermined value of the incidence angle. Also, in FIG. 12A, reference sign 1202 denotes a pan/tilt operation direction when the incidence angle for the lower movable range limit 1004 is less than or equal to a predetermined value. Also, in FIG. 12A, reference sign 1203 denotes a pan/tilt operation direction when the incidence angle for the lower movable range limit 1004 is greater than the predetermined value. In addition, when the pan/tilt operation has been performed in an opposite direction from the movable range limit that has been reached, the control unit 201 determines that the incidence angle for the movable range limit has a negative value, i.e., is less than or equal to the predetermined value.

In step S1104, the control unit 201 transmits a pan/tilt drive stopping control value to the camera 100 via the connection unit 211. If the camera 100 receives the pan/tilt drive stopping control value from the portable phone 200 via the connection unit 111, the pan/tilt drive of the imaging unit 102 stops. When the incidence angle of the pan/tilt operation for the lower movable range limit 1004 is greater than the predetermined value, as indicated by the operation direction 1203 of FIG. 12A, both pan and tilt drives are stopped as shown in FIG. 12C because the processing of step S1104 is executed.

In step S1105, the control unit 201 calculates a pan/tilt control value based on the horizontal displacement dh and vertical displacement dv saved in the working memory 204 in step S902 and the current pan/tilt position acquired in step S903. Moreover, in step S1105, the control unit 201 transmits the calculated pan/tilt control value to the camera 100 via the connection unit 211. The pan control value is calculated by multiplying the horizontal displacement dh by a coefficient. The tilt control value is calculated by multiplying the vertical displacement dv by a coefficient. The coefficient may be a predetermined value or a value designated by the user. As indicated by the operation direction 1202 of FIG. 12A, if the incidence angle of the pan/tilt operation for the lower movable range limit 1004 is less than or equal to a predetermined value, the pan/tilt drive is continued as shown in FIG. 12B, because the processing of step S1105 is performed.

Thereby, the process of the flowchart in FIG. 11 ends. In addition, in step S1103, the control unit 201 may always proceed to the processing of step S1105. In this case, after the pan/tilt drive reaches the movable range limit, the pan/tilt operation is stopped in any direction. Although the input of the pan/tilt operation is stopped or the pan/tilt drive is stopped until the pan/tilt operation of a direction other than the movable range limit that has been reached is input in the flowchart of FIG. 11, the pan/tilt drive may be resumed after the elapse of a predetermined period of time. That is, in this case, the control unit 201 controls the camera 100 to stop both pan and tilt drives until a predetermined time has elapsed from when any position of the pan and tilt directions of the camera 100 reaches the movable range limit while the pan/tilt operation is being input.

As described above, both pan and tilt drives may be stopped when either the pan or tilt reaches the movable range limit during the pan/tilt operation in the first embodiment. Thereby, it is possible to prevent the pan/tilt drive in the user's unintended direction.

Although a method for transmitting the horizontal displacement dh and the vertical displacement dv for the control values of the pan/tilt drives to the camera has been described in the present embodiment, the control value of the pan/tilt drive may also be an absolute position, a relative position, or a direction and velocity if the pan/tilt drive can be controlled by any method. Although the pan/tilt drive stopping control value is transmitted to the camera when the movable range limit of the pan/tilt drive is reached in the present embodiment, the pan/tilt drive of the camera may be stopped without transmitting the control value. Also, once the pan/tilt drive stopping control value has been transmitted, it is not necessary to transmit the pan/tilt drive stopping control value again. Moreover, the pan/tilt drive stopping control value can be a stop command or "0" can be transmitted if the movement of the pan/tilt drive is controlled at a relative position. Moreover, when the movement of the pan/tilt drive is controlled at the absolute position, the current position may be transmitted.

Although the process for stopping the operation of both pan and tilt at the movable range limit has been described in the present embodiment, it is also possible to switch the state to a valid or invalid state of that process according to a user setting. When the process is invalid, the process always moves to the processing of step S1105, for example, in step S1102 of the flowchart in FIG. 11.

### <Second embodiment>

A second embodiment of the present disclosure will be described. In the second embodiment, a method for stopping the pan/tilt drive at the movable range limit without changing the drive direction will be described. Because a camera 100 and a display control device 200, which are constituent elements of the present embodiment, are similar to those in FIGS. 1 to 3, descriptions thereof will be omitted.

### <Description of pan/tilt control flow>

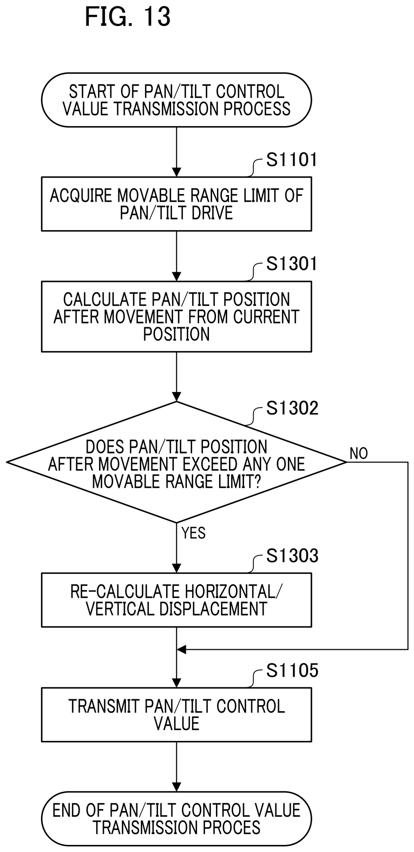

FIG. 13 is an explanatory flow of the pan/tilt control in the portable phone 200 according to the second embodiment. Among the steps in the flowchart in FIG. 13, the step of performing a process identical to that in the flowchart in FIG. 11 is denoted by reference sign identical to that of FIG. 11 and a description thereof will be omitted.

In step S1301, the control unit 201 calculates the pan/tilt position after movement from the horizontal displacement dh and vertical displacement dv stored in the working memory 204 in step S902 and the current position of the pan/tilt operation acquired in step S903. An x-coordinate of the current pan/tilt position 1005 in FIG. 10 is denoted by Ax, and a y-coordinate thereof is denoted by Ay. When the pan is driven only by the horizontal displacement dh in the right direction, a position in the pan direction after movement is denoted by Ax+dh. When the pan is driven only by the horizontal displacement dh in the left direction, a position in the pan direction after movement is denoted by Ax-dh. When the tilt is driven only by the vertical displacement dv in the upward direction, a position in the tilt direction after moving is denoted by Ay+dv. When the tilt is driven only by the vertical displacement dv in the downward direction, a position in the tilt direction after movement is denoted by Ay-dv.

In step S1302, the control unit 201 determines whether or not the pan/tilt position after movement calculated in step S1301 exceeds any one of the movable range limits 1001 to 1004 of the pan/tilt drives shown in FIG. 10. When the control unit 201 determines that the pan/tilt position after the movement exceeds any one of the movable range limits 1001 to 1004 of the pan/tilt drives, the processing of step S1303 is executed. When the control unit 201 determines that the pan/tilt position after the movement does not exceed any one of the movable range limits 1001 to 1004 of the pan/tilt drives, the processing of step S1105 is executed.

In FIG. 10, the x-coordinate of the right movable range limit 1001 is denoted by Rx, the x-coordinate of the left movable range limit 1002 is denoted by Lx, the y-coordinate of the upper movable range limit 1003 is denoted by Tx, and the y-coordinate of the lower movable range limit 1004 is denoted by By. When the pan is driven only by the horizontal displacement dh in the right direction, if Ax+dh>Rx, the control unit 201 determines that the position exceeds the movable range limit 1001 in step S1302. Moreover, when the pan is driven only by the horizontal displacement dh in the left direction, if Ax-dh<Lx, the control unit 201 determines that the position exceeds the movable range limit 1002 in step S1302. Moreover, when the tilt is driven only by the vertical displacement dv in the upward direction, if Ay+dv>Ty, the control unit 201 determines that the position exceeds the movable range limit 1003 in step S1302. Moreover, when the tilt is driven only by the vertical displacement dv in the downward direction, if Ay-dv<By, the control unit 201 determines that the position exceeds the movable range limit 1004 in step S1302.

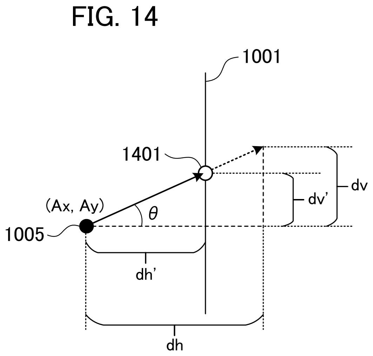

In step S1303, the control unit 201 re-calculates the horizontal and vertical displacements so that the pan/tilt position after the movement does not exceed the movable range limits 1001 to 1004. FIG. 14 is an explanatory diagram of a method for calculating the horizontal and vertical displacements at the right movable range limit. Because the x-coordinate of the right movable range limit 1001 is denoted by Rx in FIG. 10, a horizontal displacement dh' for stopping the pan drive at the right movable range limit is calculated by Rx-Ax. Furthermore, the vertical displacement dv' for stopping the pan/tilt drive at the right movable range limit without changing the drive direction is calculated by dv×(dh'/dh).

In step S1105, the control unit 201 calculates the pan/tilt control value based on the horizontal displacement dh' and the vertical displacement dv' calculated by step S1303, and transmits the calculated pan/tilt control value to the camera 100 via the connection unit 211. In this way, in the present embodiment, the pan/tilt drive of the camera 100 can be stopped at a position 1401 in FIG. 14.

As described above, the pan/tilt drive can be stopped at the movable range limit without changing the drive direction in the second embodiment.

### <Other embodiments>

Although the disclosure has been described in detail based on its preferred embodiments, the present disclosure is not limited to these specific embodiments, and various forms made without departing from the subject matter of the present invention are included in the present disclosure. Some of the above-described embodiments may be combined as appropriate.

In order to implement the functional process of the present disclosure in a computer, program codes themselves supplied to and installed on the computer also implement the present disclosure. In other words, the computer program itself to implement the functional process of the present disclosure is also included in the present disclosure. In this case, as long as the functions of a program are provided, program forms including object codes, programs executed by an interpreter, script data supplied to the OS, and the like are not limited.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., a central processing unit (CPU) and a micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

This application claims the benefit of Japanese Patent Application No. 2025-050978, filed March 26, 2025, which is hereby incorporated by reference in its entirety.

## Claims

1. A control device comprising:
a first acquisition means (205 and 600) configured to acquire control information indicating a change amount in a pan direction and a change amount in a tilt direction in an imaging device (100);
a second acquisition means (201) configured to acquire a current pan direction and a current tilt direction in the imaging device;
a third acquisition means (201) configured to acquire a first movable range limit (1001 or 1002) that is a movable range limit of the pan direction and a second movable range limit (1003 or 1004) that is a movable range limit of the tilt direction in the imaging device; and
a control means (201) configured to control changes in the pan direction and the tilt direction of the imaging device based on the acquired control information and stop the changes in both the pan direction and the tilt direction in a case where the current pan direction reaches the first movable range limit or in a case where the current tilt direction reaches the second movable range limit.

2. The control device according to claim 1, wherein the control means outputs control values for changing the pan direction and the tilt direction to the imaging device.

3. The control device according to claim 2, wherein the control values are not output to the imaging device after the current pan direction reaches the first movable range limit or the current tilt direction reaches the second movable range limit.

4. The control device according to claim 1 or 2, wherein the control means transmits information indicating a relative first position from a current rotation position corresponding to the current pan direction and a relative second position from a current rotation position corresponding to the current tilt direction in the imaging device to the imaging device.

5. The control device according to claim 4, wherein the information indicating the relative first position and the relative second position is set to a value indicating 0 after the current pan direction reaches the first movable range limit or the current tilt direction reaches the second movable range limit.

6. The control device according to claim 2, wherein the control value is set to a value indicating that there is no change after the current pan direction reaches the first movable range limit or the current tilt direction reaches the second movable range limit.

7. The control device according to claim 1, wherein the control means transmits information indicating a first rotation position corresponding to the pan direction and a second rotation position corresponding to the tilt direction in the imaging device to the imaging device.

8. The control device according to claim 7, wherein the information indicating the first rotation position and the second rotation position is set to values indicating a current first rotation position and a current second rotation position after the current pan direction reaches the first movable range limit or the current tilt direction reaches the second movable range limit.

9. The control device according to any one of claims 1 to 8,
wherein the control information includes the change amount in the pan direction and the change amount in the tilt direction, and
wherein the imaging device is controlled so that the pan direction and the tilt direction change at a unique ratio in a direction corresponding to the control information.

10. The control device according to any one of claims 1 to 9, wherein the changes in both the pan direction and the tilt direction are stopped when the current pan direction reaches the first movable range limit or the current tilt direction reaches the second movable range limit and the change amount in the pan direction of the first movable range limit and the change amount in the tilt direction of the second movable range limit are greater than predetermined values.

11. The control device according to any one of claims 1 to 9, wherein the changes in both the pan direction and the tilt direction are stopped until a predetermined period of time has elapsed after the current pan direction reaches the first movable range limit or the current tilt direction reaches the second movable range limit.

12. A control method for an imaging device (100), the method comprising:
acquiring control information indicating a change amount in a pan direction and a change amount in a tilt direction in the imaging device (S901);
acquiring a current pan direction and a current tilt direction in the imaging device (S903);
acquiring a first movable range limit (1001 or 1002) that is a movable range limit of the pan direction and a second movable range limit (1003 or 1004) that is a movable range limit of the tilt direction in the imaging device (S1001);
controlling changes in the pan direction and the tilt direction of the imaging device based on the acquired control information; and
stopping the changes in both the pan direction and the tilt direction in a case where the current pan direction reaches the first movable range limit or in a case where the current tilt direction reaches the second movable range limit (S1102 and S1104).

13. A program causing a computer to execute the method according to claim 11.
